(19) Europäisches Patentamt
European Patent Office
Office européen des brevets

(11) **EP 2 486 625 B1**

(12) **EUROPEAN PATENT SPECIFICATION**

(45) Date of publication and mention
of the grant of the patent:
**04.12.2013 Bulletin 2013/49**

(21) Application number: **10773160.6**

(22) Date of filing: **07.10.2010**

(51) Int Cl.:
*H01Q 1/38* (2006.01)          *H01Q 1/42* (2006.01)
*H01Q 1/52* (2006.01)          *H01Q 15/00* (2006.01)
*H05K 9/00* (2006.01)          *H02J 17/00* (2006.01)
*H02J 5/00* (2006.01)

(86) International application number:
**PCT/JP2010/068106**

(87) International publication number:
**WO 2011/043494 (14.04.2011 Gazette 2011/15)**

(54) **ELECTROMAGNETIC FILTER AND ELECTRONIC DEVICE HAVING SAID FILTER**

ELEKTROMAGNETISCHER FILTER UND ELEKTRONISCHE VORRICHTUNG MIT DIESEM FILTER

FILTRE ÉLECTROMAGNÉTIQUE ET DISPOSITIF ÉLECTRONIQUE COMPRENANT LEDIT FILTRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.10.2009 US 250200 P**

(43) Date of publication of application:
**15.08.2012 Bulletin 2012/33**

(73) Proprietor: **Panasonic Corporation
Kadoma-shi
Osaka 571-8501 (JP)**

(72) Inventor: **KANNO, Hiroshi
Osaka 540-6207 (JP)**

(74) Representative: **Grünecker, Kinkeldey,
Stockmair & Schwanhäusser
Leopoldstrasse 4
80802 München (DE)**

(56) References cited:
**JP-A- 9 135 197          JP-A- 11 248 835
JP-A- 2004 297 763          US-A1- 2003 071 763
US-A1- 2007 159 396          US-A1- 2008 278 264**

**Description**

## TECHNICAL FIELD

The present invention relates to an electromagnetic filter preferably mountable on an electronic device for transmitting electric power in a non-contact state with an external device, and an electronic device having the electromagnetic filter.

## BACKGROUND ART

It has been attempted for many years to provide an electronic device with a wireless communication function. In the case where a wireless communication interface is built in a housing of an electronic device, a conductive shield configuration in a part, of the electronic device, in which an antenna is to be built needs to be cut out. The reason for this is that an electromagnetic energy having an operating frequency fp used in a wireless system needs to pass the housing having an electromagnetism shielding function. In the meantime, for the purpose of avoiding an adverse influence on a peripheral device, electromagnetic noise radiating from the electronic device is restricted to have a level equal to or less than a certain value.

A conventional shield technology for passing an electromagnetic energy having a specific frequency and shielding a leak of electromagnetic noise of an unnecessary band is disclosed regarding a radio wave radar device (Patent Document No. 1).

The radar device disclosed in Patent Document No. 1 has a conductive shield configuration formed of a conductor for covering a main body of the radar. The conductive shield configuration includes a frequency-selecting screen provided so as to face an antenna. The screen is divided into a plurality of openings by an additional conductor having two ends shortcircuited at outer edges of the screen. As a result, the radar device can shield a noise electromagnetic wave having a frequency fL, which is lower than a prescribed frequency fp. An electromagnetic wave having the prescribed frequency fp can be transmitted through the radar by setting the resonant frequency of each opening to the prescribed frequency fp.

Patent Document No. 2 discloses a structure which makes it possible to shield electromagnetic noise having a frequency fH, which is higher than the frequency fp, the electromagnetic energy of which needs to pass the electromagnetism shield housing, and is difficult to be shielded by the shield configuration of Patent Document No. 1. The invention of Patent Document No. 2 provides substantially the same structure as that of Patent Document No. 1. Namely, a plurality of openings obtained by dividing the screen act as resonance slot antennas for the prescribed frequency, and an electromagnetic wave of the prescribed frequency is allowed to be transmitted through the resonated openings. According to the invention of Patent Document No. 2, a bandpass filter is additionally included for shortcircuiting two outer edges, which face each other, of each of the openings obtained by dividing the screen. This bandpass filter prevents the electromagnetic wave having the frequency fH, which is higher than the prescribed frequency fp, from passing. The technology of Patent Document No. 2 permits the passage of the electromagnetic wave having the prescribed frequency fp and shield the passage of the electromagnetic wave having the frequency fL, which is lower than the prescribed frequency fp, and also can shield the passage of the electromagnetic wave having the frequency fH, which is higher than the prescribed frequency fp.

Patent Document No. 3 discloses an invention relating to a radio frequency technology which is called FSS (frequency selective surface). The operation principle is substantially the same as the principle of passing the electromagnetic wave having the frequency fp through the conductive shield configuration in the devices in Patent Documents Nos. 1 and 2.

In the meantime, non-contact electric power transmission systems have started to be mounted on electronic devices. In the case where such a non-contact electric power transmission system is mounted on an electronic device also, the above-described problem occurring when a wireless communication system is mounted on an electronic device needs to be solved. As the electric power transmission system, a magnetic resonant coupling system described in Patent Document No. 4 has been proposed in addition to an electromagnetic induction system conventionally. The magnetic resonant coupling system described in Patent Document No. 4 can transmit the electric power for a longer distance at a higher efficiency than the conventional electromagnetic induction system, by using the resonance mode coupling between the resonant antennas. It is considered that especially in the case where a resonant magnetic field is used, the influence on living organisms around the electronic device can be avoided more certainly than when a resonance electric field is used.

## CITATION LIST

### PATENT LITERATURE

Patent Document No. 1: Japanese Laid-Open Patent Publication No. 11-248835
Patent Document No. 2: Japanese Laid-Open Patent  Publication No. 2004-297763
Patent Document No. 3: Japanese Laid-Open Patent Publication No. 9-135197
Patent Document No. 4: United States Laid-Open Patent Publication No. 2008/0278269-A1 (Figure 8, Figure 11)

## SUMMARY OF INVENTION

### TECHNICAL PROBLEM

With the structure described in each of Patent Documents Nos. 1 through 3, an electric energy is sent and received via a surface of the shield configuration or a resonance circuit formed in the vicinity of the shield configuration. Therefore, a resonance electric current flows to the conductor at the edges of the openings acting as the resonance slot antennas. In addition, a resonance electric field mode is generated as a standing wave in a frequency selective surface plate. The above-described structure of each of Patent Documents Nos. 1 through 3 has a problem caused by such a resonance electric current or resonance electric field mode, namely, the problem that unnecessary  electric power consumption lowers the electric power transmission efficiency.

Patent Document No. 4 does not describe either a method for mounting an antenna on an electronic device without deteriorating the characteristics or a method for suppressing electromagnetic noise generated from an electronic device having an electric power transmission system mounted thereon.

The present invention for solving the above-described problems of the conventional art has a first object of allowing a wireless electric power transmission system to be mounted on an electronic device without deteriorating the transmission efficiency. The present invention has a second object of expressing an electromagnetism shielding characteristic of suppressing a leak of unnecessary electromagnetic noise of a band other than a prescribed frequency band. In a preferable embodiment of the present invention, an electromagnetic filter achieving both of these two objects is provided.

### SOLUTION TO PROBLEM

An electromagnetic filter according to the present invention is locatable between a transmitting antenna and a receiving antenna for wireless transmission of radio frequency electric power. The electromagnetic filter includes a conductor having a first opening; at least one conductive strip, both of two sides of which are electrically connected to the conductor so as to divide the first opening into a plurality of second openings; and a plurality band-stop filters provided on the conductive strip for preventing an electric current from flowing in the conductive strip at a frequency of the radio frequency electric power.

An electronic device according to the present invention includes an antenna for wireless transmission of radio frequency electric power; and an electromagnetic filter. The electromagnetic filter includes a conductor having a first opening; at least one conductive strip, both of two sides of which are electrically connected to the conductor so as to divide the first opening into a plurality of second openings; and a plurality band-stop filters  provided on the conductive strip for preventing an electric current from flowing in the conductive strip at a frequency of the radio frequency electric power.

### ADVANTAGEOUS EFFECTS OF INVENTION

According to the present invention, a leak of electromagnetic noise from an electronic device can be suppressed without deteriorating the wireless electric power transmission function.

### BRIEF DESCRIPTION OF DRAWINGS

FIG. **1A** is an isometric view schematically showing an external appearance of an electronic device in Embodiment 1 according to the present invention.

FIG. **1B** is an isometric view showing the electronic device in Embodiment 1 according to the present invention in the state where an electromagnetic filter is removed.

FIG. **1C** is an isometric view schematically showing the electromagnetic filter in Embodiment 1 according to the present invention.

FIG. **2** is a cross-sectional view showing a structure of a shield configuration in Embodiment 1.

FIG. **3** is a plan view showing a structure of the electromagnetic filter in Embodiment 1 according to the present invention.

FIG. **4** is a partially enlarged view showing a detailed structure of a conductive strip **11a** shown in FIG. **3.**

FIG. **5** is a schematic isometric view showing the structure of a shield configuration in Comparative Example 1.

FIG. **6** is a structural view of an electromagnetic filter in Comparative Example 2.

FIG. **7** is a structural view of an electromagnetic filter in Comparative Example 3.

FIG. **8** is a cross-sectional view of an electromagnetic filter in Embodiment 2 according to the present invention.

FIG. **9** is a plan view of an electromagnetic filter in Embodiment 3 according to the present invention.

FIG. **10A** shows an electromagnetic filter in Embodiment 4 according to the present invention.

FIG. **10B** is a cross-sectional view showing another structure of an electromagnetic filter according to the present invention.

## DESCRIPTION OF EMBODIMENTS

Hereinafter, embodiments of an electromagnetic filter according to the present invention will be described with reference to the drawings. For an explanation, an XYZ coordinate system as shown in the figures will be used. Substantially the same elements will bear the same reference numerals.

(EMBODIMENT 1)

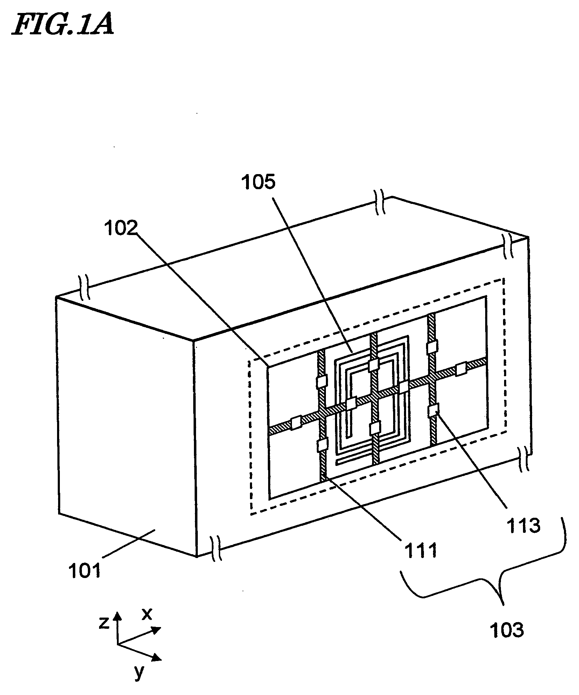

An electromagnetic filter in Embodiment 1 according to the present invention will be described. First, FIG. **1A** will be referred to. FIG. **1A** is an isometric view of an electronic device having an electromagnetic filter mounted thereon according to this embodiment.

The electronic device shown in FIG. **1A** includes an antenna **105** for sending or receiving radio frequency electric power, a shield conductor **101** for enclosing the antenna **105** and electric components not shown, and an electromagnetic filter **103** attached to an opening of the shield conductor **101** (shield opening **102**). In actuality, the electronic device includes various electronic components provided therein other than the antenna **105,** but these other elements normally included in the electronic device are not shown for the sake of simplicity. The shield conductor **101** has a rectangular (including square) parallelepiped shape in the figure, but is not limited to having the shape shown in the figure in actuality. In FIG. **1A,** the shield opening **102** is large and formed in a front surface. The shape, size and position of the shield opening **102** of the electronic device can be arranged in accordance with those of the antenna **105** and are not limited to those shown in the figure.

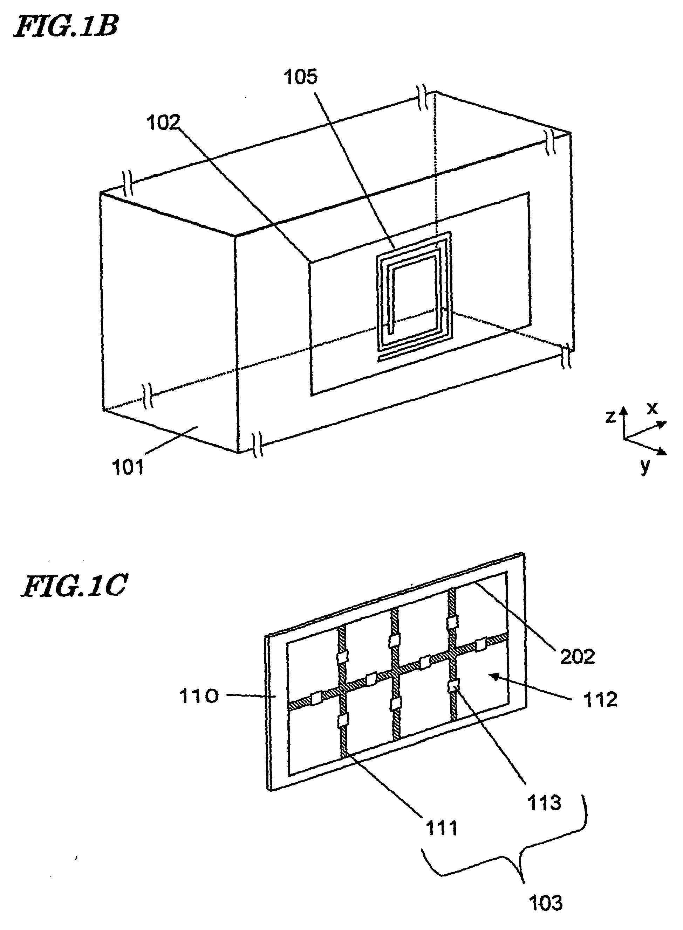

Now, FIGS. **1B** and **1C** will be referred to. FIG. **1B** is an isometric view showing the electronic device in the state where the electromagnetic filter **103** is removed. FIG. **1C** is an isometric view showing only the electromagnetic filter **103** in this embodiment.

As shown in FIG. **1B,** the antenna **105** is located inside the shield conductor **101** of the electronic device and faces the shield opening **102** formed in the shield conductor **101.** The antenna **105** is electrically connected to a circuit or an electronic component not shown. The antenna **105** in this embodiment is an element for sending or receiving electric power wirelessly (in a non-contact state). For transmitting electric power wirelessly, the electronic device is located in the vicinity of another antenna resonating at the same frequency as the resonant frequency of the antenna **105.** According to the wireless transmission system using a resonant magnetic field, the distance between the antennas may be selected to be of any value in a wide range from several centimeters to several meters. The electronic device according to the present invention may include a general antenna for sending or receiving an electromagnetic wave. The antenna **105** itself may be operative as a general antenna for sending or receiving an electromagnetic wave. The "general antenna" means an antenna for radiating electromagnetic waves in the distance, which includes a dipole antenna, a patch antenna, a slot antenna, and a helical antenna. The antenna used in the device according to the present invention may be an antenna for communications, such as a loop antenna the size of which is smaller than the wavelength of communication waves.

When the conventional electromagnetic induction system is used for a wireless energy transmission, the antenna 105 is arranged to be non-resonant at the frequency of the electromagnetic wave which carries the electric power.

As shown in FIG. **1C,** the electromagnetic filter **103** in this embodiment includes a conductor having an opening **202** (ground conductor **110**) and a plurality of conductor strips **111,** two ends of each of which are both electrically connected to the ground conductor **110** so as to divide the opening **202** into a plurality of divided openings **112.** The conductive strips **111** are each provided with a plurality of band-stop filters **103** for preventing an electric current from flowing in the conductive strips **111** at a frequency of the radio frequency electric power. For example, the frequency of the radio frequency electric power is in the range of  10 kHz to 10 GHz.

In the example shown in FIG. **1C,** four conductive strips **111** divide one opening **202** into six divided openings **112.**

In this embodiment, as shown in FIG. **1A,** the electromagnetic filter **103** is attached to the shield conductor **101** so as to close the shield opening **102** of the shield conductor **101** in the electronic device. The shield conductor **101** shown in FIGS. **1A** and **1B** has a shape enclosing the antenna **105** and is grounded. The shield conductor **101** has a function of electromagnetically shielding the electronic device accommodated therein from an outer space. The shield conductor **101** is formed of, for example, a metal sheet having a thickness of 100 microns to 10 mm. The shield conductor **101** may be formed of a metal mesh or have a mesh structure. It is not necessary that the entirety of the electronic device is covered with the shield conductor **101.** However, in order to efficiently suppress the adverse influence of the electromagnetic noise which may radiate from the inside of the electronic device, it is desirable that the  shield conductor **101** substantially covers the entirety of the electronic device.

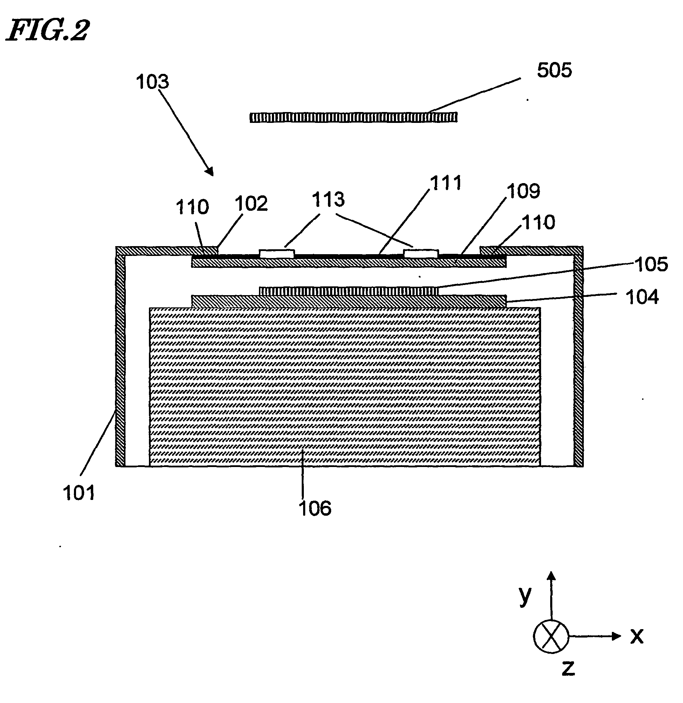

Now, FIG. **2** will be referred to. FIG. **2** shows an example of a cross-sectional structure of the electronic device in this embodiment. The antenna **105** in this embodiment has a conductive pattern formed on an antenna substrate **104.** Such a conductive pattern may be formed of a patterned metal foil, or may be produced by etching a metal thin film deposited on the antenna substrate **104.** The antenna **105** may be a self-standing configuration formed by processing a metal material. In this case, the antenna substrate **104** for supporting the antenna **105** is not necessary. Preferably, the antenna **105** is fixed to the inside of the electronic device via a prescribed support **106.** The support **106** may be formed of a dielectric material or a low-loss magnetic material (*e.g.*, ferrite or amorphous magnetic material). In the case where the support **106** is formed of a low-loss magnetic material, it is easy to produce the electronic device with a small thickness.

As shown in FIG. **2,** the antenna **105** is located at a  position facing the shield opening **102** of the shield conductor **101,** and faces another antenna **505** located outside the electronic device. The electromagnetic filter **103** closes the shield opening **102,** and so the plurality of conductive strips **111** and the plurality of band-stop filters **113** are located between the antenna **105** and the antenna **505.** The functions of these conductive strips **111** and the band-stop filters **113** will be described later in detail.

In the example shown in FIG. **2,** the conductive strips **111** and the band-stop filters **113** are provided on one dielectric substrate **109.** The dielectric substrate **109** is fixed to the shield conductor **101** so as to cover the shield opening **102,** and faces the antenna **105.** In this embodiment, the ground conductor **110** of the electromagnetic filter **103** contacts the shield conductor **101,** and the ground conductor **110** and the shield conductor **101** are electrically conductive to each other. The ground conductor **110,** together with the shield conductor **101**, forms a shield configuration enclosing the antenna **105.** The ground conductor **110** is grounded via the shield conductor **101** and/or a line not shown.

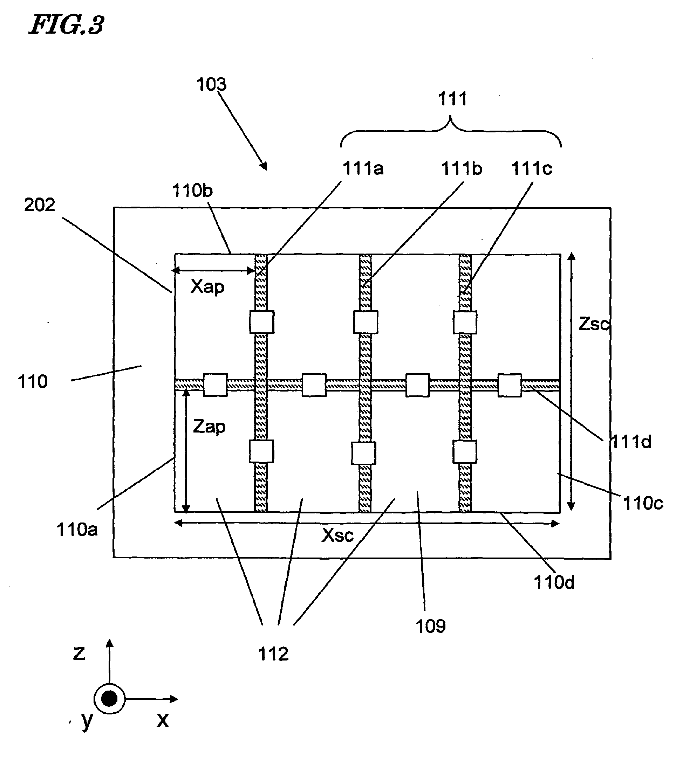

With reference to FIG. **3,** the structure of the electromagnetic filter **103** in this embodiment will be described in more detail. FIG. **2** described above corresponds to a cross-sectional view of the view shown in FIG. **3.**

The electromagnetic filter **103** includes the dielectric substrate **109** (see FIG. **2**) having a sufficient size to cover the shield opening **102,** the ground conductor **110** formed to have a surrounding shape on the dielectric substrate **109** so as to fit to an edge (i.e., inner perimeter) of the shield opening **102,** and conductive strips **111a** through **111d** (hereinafter, collectively represented with the reference numeral "**111**") formed on the dielectric substrate **109** and inside an inner perimeter of the ground conductor **110** for shielding an electromagnetic wave having a low frequency fL. The ground conductor **110** and the conductive strips **111** are formed of a patterned metal thin film. In a preferable example, the ground conductor **110** and the conductive strips **111** are integrally formed by patterning one metal thin film. In this embodiment, the ground conductor **110,** the conductive strips **111,** and the band-stop filters **113** are formed on a +Y surface of the dielectric substrate **109** as shown in FIG **2.**

In this embodiment, the shield opening **102** has a rectangular (including square) shape. Therefore, the inner perimeter of the ground conductor **110** (the opening **202**) also has a rectangular (including square) shape having sides **110a**, **110b**, **110c** and **110d.** The conductive strips **111a** through **111d** are each formed inside the inner perimeter of the ground conductor **110** and on the dielectric substrate **109** so as to electrically connect parts of the ground conductor **110** facing each other.

In more detail, the conductive strips **111a** through **111c** each extend in a Z axis direction so as to electrically connect two sides **110b** and **110d** of the ground conductor **110** facing each other. Such conductive strips **111a** through **111c** are arranged in an X axis direction at a prescribed interval. By contrast, the conductive strip **111d** extends in the X axis direction so as to electrically connect two sides **110a** and **110c** of the ground conductor **110** facing each other.

In this embodiment, a number **N1** of the conductive strips extending in the Z axis direction is 3, whereas a number **N2** of the conductive strips extending in the X axis direction is 1. However, the present invention is not limited to such an example, and the effect of the present invention is expressed as long as the value of **N1** + **N2** is 1 or greater.

The conductive strips **111a** through **111c** extending in the Z axis direction and the conductive strip **111d** extending in the X axis direction cross each other, and are electrically connected to each other at the intersections. The ground conductor **110** is electrically connected to the shield conductor **101** at the edge of the shield opening **102.** The conductive strips **111a** through **111d** divide the shield opening **102** into a plurality of second openings (divided openings **112**). The inner perimeter of the shield opening **102,** namely, the inner perimeter of the ground conductor **110** has a size defined by a length **Xsc** in the X axis direction and a length **Zsc** in the Z axis direction. Each divided opening **112** has a length **Xap** in the X axis direction and a length **Zap** in the Z axis direction. In a preferable embodiment, at least one divided opening **112** has a perimeter length which is shorter than a wavelength of the electromagnetic wave defined by the frequency of the radio frequency electric power.

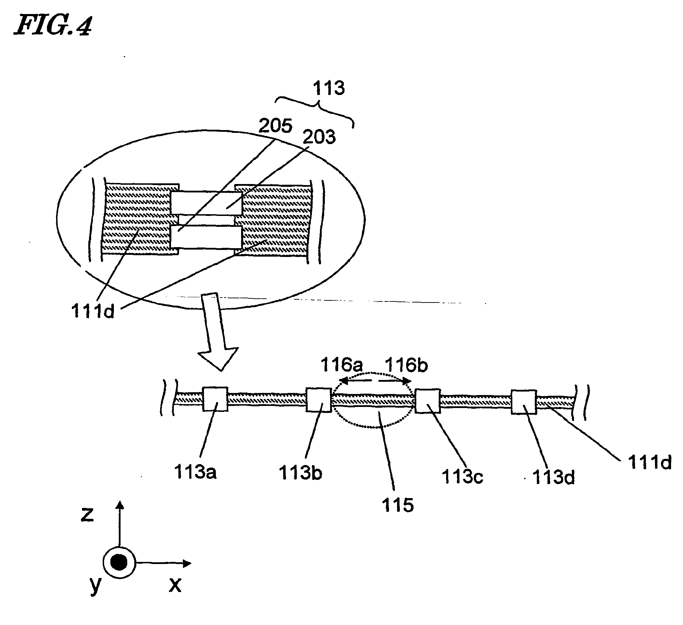

Now, with reference to FIG. **4,** a structure and an operation of the band-stop filters **113** will be described. In FIG. **4,** only the conductive strip **111d** and the band-stop filters **113** provided thereon are shown for the sake of simplicity.

In this embodiment, as shown in FIG. **4,** the conductive strips **111a** through **111d** each include a plurality of band-stop filters **113a**, **113b**, **113c**, ... (hereinafter, collectively represented with the reference numeral "**113**"). The band-stop filters **113** each have a structure in which an inductor **203** (e.g., a coil) and a capacitor **205** (e.g., a capacitor) are arranged in parallel to each other. Each of the band-stop filters **113** serves as an LC resonance circuit in which the inductor **203** and the capacitor **205** are coupled in parallel. The conductive strip **111** is divided into a plurality of conductive parts, and the band-stop filter **113** is inserted at each of the dividing positions of the conductive strip **111.** In more detail, as shown in FIG. **4,** the inductor **203** and the capacitor **205** are located in parallel so as to couple two conductive parts separated from each other on a straight line. In this embodiment, one conductive strip **111** is divided into a plurality of conductive parts, which are separated from one another. The structure of the conductive strip **111** is not limited to this. It is sufficient as long as the conductive strip **111** has an insulating part for preventing the passage of an electric current at a position at which the band-stop filter **113** is located.

The band-stop filter **113** is designed so as to shield only a radio frequency current component in the vicinity of the frequency fp, among the radio frequency components passing the conductive strip **111.** More specifically, the levels of the inductance L and the capacitance value C are set such that the resonant frequency f of the band-stop filter represented by the following expression 1 matches the prescribed frequency fp.

$$f = 1/(2\pi \times (LC)^{0.5}) \ ... \ (expression \ 1)$$

On each of the plurality of conductive strips **111a** through **111d**, adjacent band-stop filters **113** are located away from each other by a prescribed distance **Lst**.

As routes from an arbitrary area **115** on the conductive strip **111d** to the sides **110a** and **110c** (FIG. 3) of the inner perimeter of the ground conductor **110** along the conductive strip **111d,** there are two routes **116a** and **116b** represented by the arrows in FIG. **4.** Where a radio frequency magnetic field having the prescribed frequency fp is distributed in a space around the area **115,** an electric charge is generated in the area **115** by the interaction between the radio frequency magnetic field and the conductive strip **111d**. The generated charge tends to flow to the ground conductor **110** along the routes **116a** and **116b**.

With the structure of this embodiment, the band-stop filter **113b** is inserted on the route **116a** side and also the band-stop filter **113c** is inserted on the route **116b** side. Therefore, the radio frequency current having the prescribed frequency fp generated in the area **115** is stopped by the band-stop filters **113b** and **113c.** As a result, a radio frequency current itself flowing from the area **115** to the ground conductor **110** cannot be generated. Therefore, even where a radio frequency magnetic field having the prescribed frequency fp is distributed in the space around the area **115,** the interaction between the conductive strip **111d** and the distributed radio frequency magnetic field is suppressed.

In the case where the plurality of band-stop filters **113** are located on one conductive strip **111** so as to divide the conductive strip **111** at a plurality of positions, a wide area, in which a radio frequency current of the prescribed frequency fp cannot flow, can be expressed on the conductive strip **111.**

In the example shown in FIG. **3,** the conductive strips **111a** through **111c** parallel to the Z axis direction and the conductive strip **111d** parallel to the X axis direction are electrically connected to each other at each of the intersections. In this example, there are three or more routes from a prescribed area on the conductive strips **111** to the ground conductor **110.** Even in such a case, an area, in which the radio frequency current of the prescribed frequency fp cannot flow, can be expressed on the conductive strip **111** by inserting the band-stop filters **113** to all the routes. In this case, it is preferable to prevent the flow of the radio frequency current of the prescribed frequency fp in the entire area of the conductive strips **111** present on the electromagnetic filter **103.** With such an arrangement, the radio frequency magnetic field of the prescribed frequency fp which passes the electromagnetic filter **103** in $\pm$Y directions cannot interact with the conductive strips **111** at all. Accordingly, in the electromagnetic filter **103** in this embodiment, the plurality of divided openings **112** do not resonate at the prescribed frequency fp owing to the plurality of band-stop filters **113** provided on each of the conductive strips **111.** This allows the radio frequency magnetic field of the prescribed frequency fp to freely pass the electromagnetic filter **103.**

The shield technology working by the above-described principle can decrease the loss of conductivity in the conductive strips **111** more than the conventional shield technology using the resonance slot antenna. When the conductivity of the conductive strips **111** is lost, the wireless electric power transmission efficiency is deteriorated. Therefore, when the loss of conductivity is decreased, the deterioration of the wireless electric power transmission efficiency is suppressed. The electromagnetic filter in this embodiment avoids the deterioration of the wireless electric power transmission efficiency caused by the dielectric loss, and so deteriorates the efficiency by a smaller degree even as compared with the frequency selective surface plate using the distribution of the electric field in the resonator.

In the meantime, the current of a radio frequency other than the prescribed frequency fp can flow in the conductive strips **111**. In more detail, in a frequency band fL which fulfills fp > fL, the radio frequency current flows to the inductor circuit **203**. In a frequency band fH which fulfills fp < fH, the radio frequency current can flow in the capacitor circuit **205**. Therefore, the conductive strips **111** can keep an electromagnetic noise shielding characteristic equivalent to that of the conventional shield technology in a band of a frequency other than the prescribed frequency fp.

The distance between two adjacent band-stop filters **113** on each conductive strip **111** is preferably designed so as not to be effectively equal to N/2 wavelength where N is an integer of 1 or greater. In other words, where a wavelength of an electromagnetic wave defined by the frequency of the radio frequency electric power is $\lambda$, the band-stop filters **113** are preferably arranged on the conductive strip **111** at an interval which is different from $(N/2) \times \lambda$. In the case where both of two ends of the area **115** are opened, like in a circuit, to the radio frequency current having the prescribed frequency fp and as a result, the line length of the area **115** is effectively equal to N/2 wavelength, the area **115** itself in the conductive strip **111** acts as a resonant antenna. As a result, there occurs a risk that the transmission efficiency may be deteriorated due to an unnecessary loss of conductivity. For this reason, it is preferable that the distance between adjacent band-stop filters **113** is effectively different from N/2 wavelength, and it is more preferable that the distance is set to be effectively shorter than N/2 wavelength.

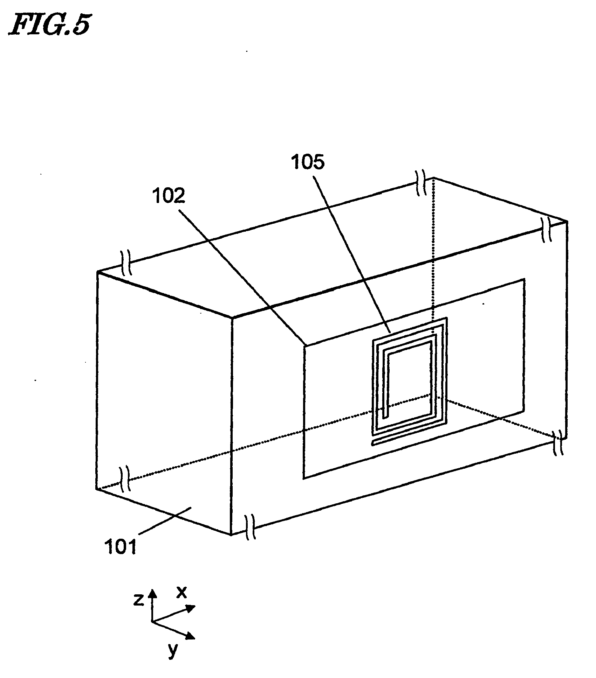

Now, with reference to FIGS. **5**, **6** and **7**, a structure and an operation of electromagnetic filters of conventional technologies will be described as comparative examples for this embodiment.

FIG. **5** is an isometric view showing a structure according to a conventional technology by which the conductive strips **111** are not provided (Comparative Example 1). In Comparative Example 1, there is no measure to suppress the passage of unnecessary electromagnetic noise of a low frequency band via the electromagnetic filter **103**. Therefore, the shielding characteristic on a low band noise component cannot be improved.

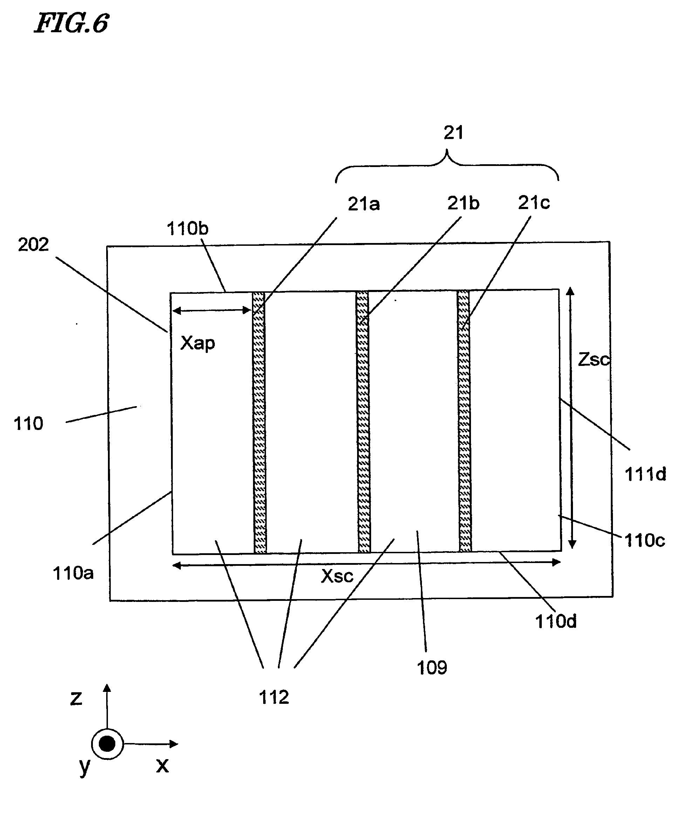

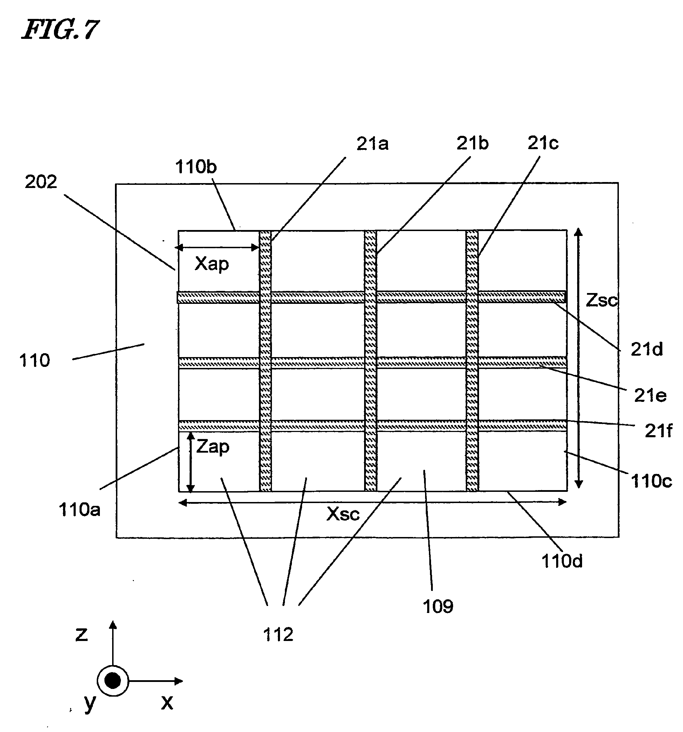

FIG. **6** is a cross-sectional view showing a structure of an electromagnetic filter in Comparative Example 2, and FIG. **7** is a cross-sectional view showing a structure of an electromagnetic filter in Comparative Example 3.

Comparative Example 2 is directed to a conventional technology by which the electromagnetic filter shown in FIG. 6 is added to the structure of Comparative Example 1. With reference to FIG. **6,** the electromagnetic filter includes the dielectric substrate **109** and the ground conductor **110** which are substantially the same as those of the electromagnetic filter shown in FIG. **3**. The electromagnetic filter shown in FIG. **6** further includes a plurality of conductive strips **21a** through **21c** (hereinafter, collectively represented with the reference numeral "21"), which are formed on the dielectric substrate **109** and inside the inner perimeter of the ground conductor **110** and do not have any band-stop filter (namely, any LC parallel resonance circuit **113**).

The conductive strips **21a** through **21c** each extend in the Z axis direction so as to electrically connect the two sides **110b** and **110d** of the ground conductor **110** facing each other. Such conductive strips **21a** through **21c** are arranged in the X axis direction at a prescribed interval. Owing to this, the conductive strips **21a** through **21c** divide the shield opening **102** shown in FIG. **5** into a plurality of divided openings **112**.

The shielding effect on the radiating electromagnetic wave having a vertical polarization can be expressed by making the length **Xap** of each divided opening **112** in the X axis direction shorter than the length **Xsc** of the shield opening **102** in the X axis direction. In the structure of FIG. **6**, the length **Zap** of each divided opening **112** in the Z axis direction is the same as the length **Zsc** of the shield opening **102** in the Z axis direction. Namely, in Comparative Example 2, the shield opening **102** having a large area size is replaced with an assembly of the plurality of divided openings **112** each having a small area size. This generates the shielding effect on electromagnetic noise of a low frequency band passing the electromagnetic filter, and thus improves the shielding effect on the low band noise component.

If the polarization component of the noise electromagnetic wave, which is to be suppressed, includes a horizontal polarization component, it is necessary to express the shielding effect on the radiating electromagnetic noise having the horizontal polarization in addition to the radiating electromagnetic noise having the vertical polarization. Comparative Example 3 shown in FIG. **7** has a structure in which a plurality of conductive strips **21d** through **21f** having no band-stop filter (namely, LC parallel resonance circuit **113**) are added to the structure of Comparative Example 2.

The conductive strips **21d** through **21f** extend in the X axis direction so as to electrically connect the sides **110a** and **110c** of the ground conductor **110** facing each other. Such conductive strips **21d** through **21f** are arranged in the Z axis direction at a prescribed interval. Owing to this, the conductive strips **21a** through **21f** divide the shield opening **102** shown in FIG. **5** into a plurality of divided openings **112**. In order to express the shielding effect on both of the radiating electromagnetic wave having a vertical polarization and the radiating electromagnetic wave having a horizontal polarization, it is effective to, as shown in FIG. **7**, add the conductive strips **21d** through **21f** extending in the X axis direction to the structure of the electromagnetic filter shown in FIG. **6** and make the length **Zap** of each divided opening **112** in the Z axis direction shorter than the length **Zsc**. By replacing the shield opening **102** having a large area size with an assembly of the divided openings **112** each having a small area size, the shielding characteristic on the low band noise component can be improved.

However, in Comparative Examples 2 and 3, when the radio frequency magnetic field of the prescribed frequency passes the electromagnetic filter, the passing radio frequency magnetic field and the conductive strips **21** interact with each other unavoidably. When an electric charge is generated on the conductive strips **21** by this interaction, the generated electric charge flows to an end of the electromagnetic filter, which is the shortcircuiting point of the conductive strips **21**/ ground conductor **110** and the shield conductor **101**. The loss of conductivity caused by the flow of the radio frequency current through the conductive strips **21** deteriorates the electric power transmission efficiency. Therefore, in Comparative Examples 2 and 3, the efficiency of the electric power transmission system using the prescribed frequency fp is deteriorated.

By contrast, with the electromagnetic filter **103** in this embodiment of the present invention, as described above, a plurality of LC parallel resonance circuits **113** acting as the band-stop filters are inserted to each of the conductive strips **111**. As a result, the first object of avoiding the deterioration of the efficiency of the wireless electric power transmission system at the prescribed frequency fp and the second object of keeping the shielding characteristic on the electromagnetic noise component can be both achieved.

With the photonic band conventional technology, a state of energy which can be assumed by the electromagnetic wave advancing in the space can be controlled by using a dielectric material having the periodic structure. However, the purpose of using the conventional photonic band technology is to change the radiation characteristic from the electromagnetic wave release source such as an antenna, a fluorescent body or the like. By contrast, the present invention is directed to a novel structure for preventing a radio frequency magnetic field, distributed in the vicinity of the antenna for supplying the radio frequency magnetic field, from being coupled to a conductor. The operation principle of the present invention is significantly different from that of the conventional technology.

In general, in many examples in which the photonic band structure is used to radiate an electromagnetic wave, the disturbance of the periodic structure is introduced in the radiation direction. Namely, the electromagnetic energy is efficiently released in a single direction by forming a configuration having a dielectric constant changing periodically in an area around a radiation source and then lowering the degree of the periodicity in the radiation direction. In this case, an electromagnetic wave reflection configuration realized by the periodic structure is provided so as to suppress the radiation of the electromagnetic energy in a direction other than the energy release direction.

By contrast, with the structure of the present invention, a conductive configuration designed to control the state of energy of the electromagnetic wave is located in a direction in which the radio frequency magnetic field passes. The reason for this is that the structure of the present invention does not shield the electromagnetic wave advancing in the space, but selectively shields the electromagnetic energy propagated on the conductive strips **111** by the electric current. In this manner, the structure of the present invention avoids the deterioration of the efficiency of electromagnetic energy transmission at the prescribed frequency fp by a method of controlling the electromagnetic energy, which is different from the conventional technology.

In Comparative Examples 2 and 3, a radio frequency current of the prescribed frequency fp needs to flow through the edge of each divided opening **112,** namely, the conductive parts of the electromagnetic filter. Therefore, the length of the edge of each divided opening **112** is set to the length of the slot resonator (for example, 1 effective wavelength). This is also true with the case where a frequency selective surface plate is designed using the resonance of the 1/2 wavelength mode. Accordingly, in this case; the size of the resonance circuit is set to, for example, about half of the effective wavelength. If the operating frequency of the electric power transmission system is set to 13.56 MHz, the resonance slot antenna needs to have a size of 22 m per loop. In the case where a ceramic material having a dielectric constant of 9 is used, the frequency selective surface plate needs to have a length of about 3.7 m. Namely, in the conventional shield configuration, a resonance circuit having a size corresponding to the wavelength of the electromagnetic wave having the prescribed frequency fp is used, and so it is significantly difficult to avoid a leak of unnecessary electromagnetic noise. The huge size set for the divided openings makes it difficult to apply the conventional technology to mobile AV devices.

By contrast, in the embodiment of the present invention, the radio frequency current does not flow to the conductive strips **111** around the divided openings **112.** Therefore, the length of the edge of each divided opening **112** can be designed with no dependence on the wavelength of the radio frequency magnetic field to be sent or received. Thus, according to the present invention, the divided openings **112** which are much smaller than the divided openings **112** by the conventional technology can be formed. Owing to the small divided openings **112**, the electromagnetic filter **103** according to the present invention can significantly improve the shielding characteristic on electromagnetic noise of the low band frequency fL and also on the high band frequency fH.

A frequency at which the shielding characteristic expressed by the divided openings **112** on the electromagnetic noise component having a vertical polarization may be the cutoff frequency represented by the following expression 2.

$$f = 30/(2 \times Xap)) \ (GHz) \ ... \ (expression \ 2)$$

By setting the cutoff frequency to be higher than the prescribed frequency fp, the electromagnetic noise suppressing effect can be expressed even on the high band frequency fH higher than the prescribed frequency fp. With the device disclosed in Patent Document No. 2, the resonance phenomenon is used to provide a band in which the electromagnetic noise is suppressed in the high band fH, and so the stopband in the high band fH is narrow. By contrast, with the structure of the electromagnetic filter according to the present invention, the stopband in the high band fH expands over a wide range from the cutoff frequency to the prescribed frequency fp. Therefore, the noise suppressing characteristic can be provided in a very wide band under certain conditions for dividing the opening.

(EMBODIMENT 2)

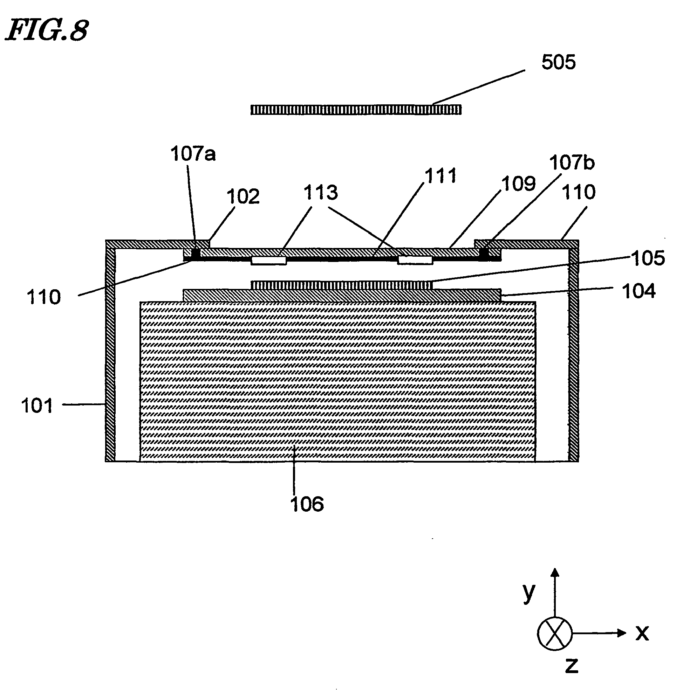

Now, with reference to FIG. **8**, Embodiment 2 of the present invention will be described. FIG. **8** is a cross-sectional view showing a structure of an electronic device including an electromagnetic filter in this embodiment.
In the electromagnetic device in this embodiment, as shown in FIG. **8**, the conductive strips **111** and the band-stop filters **113** are formed on a -Y surface of the dielectric substrate **109** (i.e., inside the shield configuration). In this embodiment, for the purpose of electrically connecting the conductive strips **111** and the shield conductor **101** to each other, a plurality of via conductors are provided along the inner perimeter of the ground conductor **110** at a prescribed interval so as to pass throughout the dielectric substrate **109** at positions in the ground conductor **110**. In FIG. **8**, via conductors **107a** and **107b** (hereinafter, collectively represented with the reference numeral "**107**") are shown. An end of each via conductor **107** is electrically connected to the ground conductor **110** on the -Y surface of the dielectric substrate **109,** and the other end thereof is electrically connected to the shield conductor **101** on the +Y surface of the dielectric substrate **109.** In other words, the electromagnetic filter of this embodiment coprises a terminal for electrically connecting the conductor serving as the ground conductor **110** to the shield conductor **101.** The structure of this embodiment is preferable in that the conductive strips **111** and the band-stop filters **113** are not exposed to the outside of the shield configuration and thus do not spoil the external appearance of the electronic device.

(EMBODIMENT 3)

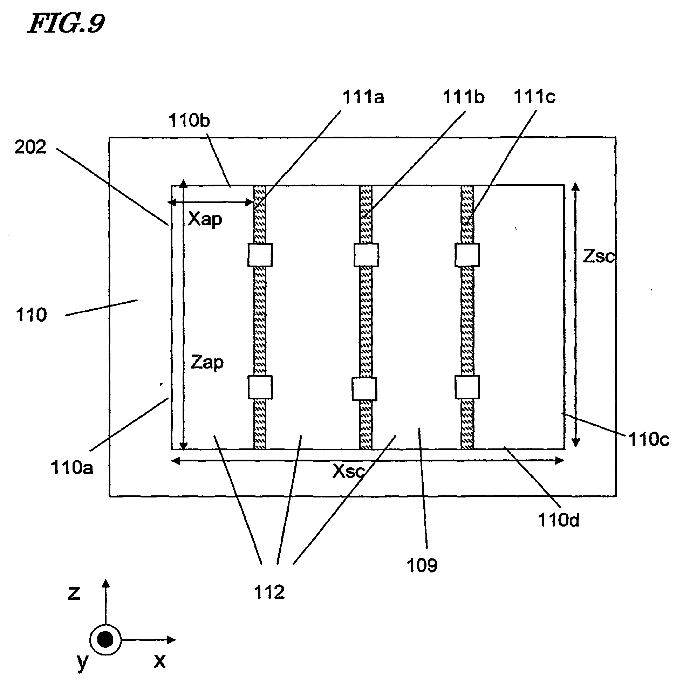

Now, with reference to FIG. **9**, Embodiment 3 of the present invention will be described. FIG. **9** is a cross-sectional view showing a structure of an electromagnetic filter in this embodiment.
In this embodiment, the conductive strips **111a** through **111c** extend in the Z axis direction so as to electrically connect two sides **110b** and **110d** of the ground conductor **110** facing each other. The conductive strips **111a** through **111c** are arranged in the X axis direction at a prescribed interval. Owing to this, the conductive strips **111a** through **111c** divide the shield opening **102** into a plurality of divided openings **112.** Accordingly, the length **Xap** of each divided opening **112** in the X axis direction is made shorter than the length **Xsc** of the shield opening 102 in the X axis direction. Therefore, the shielding effect can be expressed on the electromagnetic noise.

(EMBODIMENT 4)

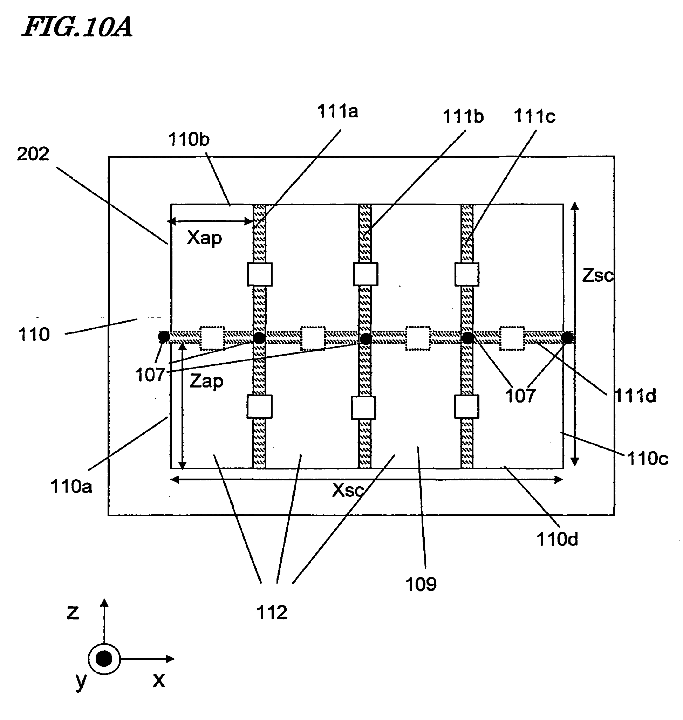

Now, with reference to FIG. **10A,** Embodiment 4 of the present invention will be described. FIG. **10A** shows a structure of an electromagnetic filter according to an embodiment of the present invention.
The conductive strips **111a** through **111c** and the conductive strip **111d** are not limited to being formed on the same conductive surface, and may be respectively formed on two conductive surfaces of the dielectric substrate **109,** which is a two-sided printed circuit board.
In the embodiment shown in FIG. **3**, the conductive strips **111a** through **111c** and the conductive strip **111d** are electrically connected to each other at the intersections. In this embodiment also, the conductive strips **111a** through **111c** and the conductive strip **111d** may be electrically connected to each other through the via conductors **107** at the positions where the conductive strips **111a** through **111c** and the conductive strip **111d** face each other. Alternatively, the conductive strips **111a** through **111c** and the conductive strip **111d** may be electrically connected to each other only partially through the via conductor(s) **107**, or may be non-connected at all.
The electromagnetic filter **103** in an embodiment according to the present invention is not limited to covering the entirety of the shield opening **102**. The electromagnetic filter **103** may be located at any position as long as the electromagnetic filter **103** at least partially faces the antenna **105** and is operable as a filter against a radio frequency magnetic field to which the antenna **105** is coupled.

It is not necessary to separately provide and bring together the shield conductor **101** and the ground conductor **110** as shown in FIG **2**. For example, the +Y surface, of the shield conductor **101,** which is normal to the Y axis may be entirely formed of the ground conductor **110**. In this case, the shield conductor **101** and the ground conductor **110** may be structured to be at least partially integrated together.

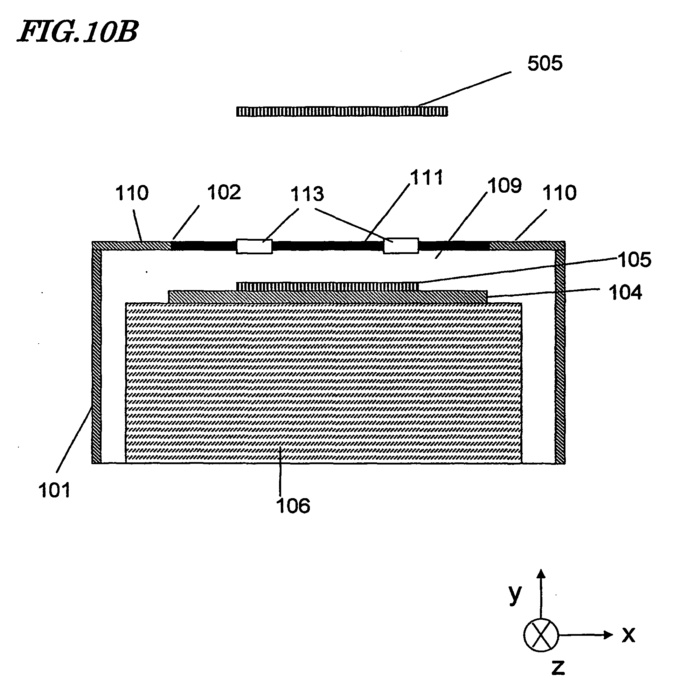

FIG. **10B** is a cross-sectional view showing an example of a structure in which the shield conductor **101** and the ground conductor **110** are integrally formed of one metal sheet. The ground conductor **110** is a part, of the shield conductor **101**, which is connected to the conductive strips **111**. In this example, the ground conductor **110** and the shield conductor **101** are integrated, and do not need to be distinguished from each other. In this case, the conductive strips **111** may be integrally formed with the ground conductor **110** and the shield conductor **101**.

In the above embodiment, the opening **102** of the shield conductor **101** and an opening **202** of the ground conductor **110** are common in the shape and size and are located such that the inner perimeters thereof match each other. The present invention is not limited to this. The opening **102** of the shield conductor **101** may be larger or smaller than the opening **202** of the ground conductor **110**. The shield conductor **101** and the ground conductor **110** are electrically conductive to each other and may act as one conductor. Accordingly, in the present invention, the "first opening" which is divided by the conductive strips is an area in which neither the shield conductor **101** nor the ground conductor **110** is existent.

The electromagnetic filter in an embodiment of the present invention is not limited to having a planar shape. The electromagnetic filter may be structured to have a concentric spherical shape having a wave source of the antenna **105** as the center, or may be concaved and convexed. Even in such a case, the effects of the present invention can be provided. Even in the case where the electromagnetic filter is concaved and convexed, the plurality of conductive strips 111 can be structured in substantially the same manner as in the above-described embodiments. Even an electromagnetic filter having a non-planar structure may include a plurality of first conductive strips **111** provided parallel to a first direction and in a prescribed plane including the shield opening **102** and also a second conductive strip **111** provided parallel to a second direction crossing the first direction and in the above-described plane like in FIG. **3** or FIG. **10A.** At least a part of the first conductive strips **111** and at least a part of the second conductive strips **111** may be connected to each other.

The electromagnetic filter in an embodiment of the present invention may include a printed circuit board having one conductive surface as shown in FIG. **3** or FIG. **9** or a two-sided printed circuit board shown in FIG. **10A.** The electromagnetic filter is not limited to having such a structure, and may include a multi-layer printed circuit board including three or more layers. Each of the conductive parts of the electromagnetic filter (namely, the ground conductor **110**, the conductive strips **111**, and the mounting surface of the band-stop filters **113**) may be formed of at least one arbitrary conductive layer of the multi-layer printed circuit board. In other words, the printed circuit board which is preferably used in the preferred embodiment may comprise at least one conductive layer for forming the conductive strips **111** and the band-stop filters **113.**

The electromagnetic filter in an embodiment of the present invention is not limited to being at least partially formed of a dielectric substrate or material, or a magnetic substrate or material. When there is no problem in terms of the air-tightness of the electronic device, the conductive strips **111** may be completely exposed to the air without being supported by the dielectric material.

As described above, according to a preferable embodiment of the present invention, the conductive strips **111** each include a plurality of LC parallel resonance circuits **113** each acting as a band-stop filter. Therefore, prevention of efficiency deterioration of wireless electric power transmission at the prescribed frequency fp to and from the antenna shielded by the electromagnetic filter, and also realization of an electromagnetic filter having an electromagnetic noise shielding effect, which are difficult to realize with the conventional technology, can be realized.

The antenna **105** includes at least a looped or spiral inductor circuit and a capacitor circuit. In an embodiment in which wireless electric power transmission is performed using the resonant magnetic field, the antenna **105** is a resonance circuit resonating at the prescribed frequency fp. In the antenna **105**, the capacitor circuit may be realized by a lumped constant element such as a chip capacitor element or the like, or by a capacitor generated in a distributed manner along the inductor line. In the antenna **105**, the inductor circuit and the capacitor circuit may be connected in series or in parallel. In a preferable embodiment, for transmitting the electric power, the antenna **105** is magnetically coupled with another antenna located close to, and outside, the electronic device, and sends or receives the electric power. The another antenna is designed to resonate at a resonant frequency which is generally equal to that of the antenna **105**.

In this specification, the expression "generally equal" used regarding the resonant frequency means that two resonant frequencies fT and fR have the following relationship.

$$|fT - fR| \leq fT/QT + fR/QR \ldots \text{(Expression 3)}$$

In the expression, QT is the Q factor of the resonator of a first antenna, and QR is the Q factor of the resonator of a second antenna. In general, where the resonant frequency is X and the Q factor of the resonator is Qx, the band in which the resonators resonate corresponds to X/Qx. When fT and fR have the relationship of $|fT - fR| \leq fT/QT + fR/QR$, energy transmission by the magnetic resonant coupling is realized between the two resonators.

As described above, according to the present invention, the resonant frequencies fT and fR of two antennas for performing energy transmission do not need to match each other completely. In order to realize highly efficient energy transmission based on the coupling of the resonators, it is ideal that fT = fR, but it is acceptable that the difference between fT and fR is sufficiently small.

When the conventional electromagnetic induction system is used for a wireless energy transmission, the antenna **105** may comprise an inductor circuit with a spiral shape. At least one of the pair of antennas for the electromagnetic induction system is preferably arranged to be non-resonant at the frequency of the electromagnetic wave which is used for wireless power transmission. The non-resonant antenna does not require a capacitor circuit in contrast to the resonant antennas which are used for the wireless energy transfer by resonant magnetic coupling. The non-resonant antenna may have a capacitor circuit, but the resonant circuit formed of the capacitor circuit and the inductor can have a resonant frequency that is different from the frequency of the electromagnetic wave which is used for the wireless power transmission. According to the electromagnetic induction system, it is preferable that a coupling coefficient of the pair of antennas is high if the distance between the antennas is long. In order to attain a high coupling coefficient, the antenna is preferably formed of a spiral inductor with a magnetic core having permeability greater than one.

The number of the another antenna(s) to which the antenna **105** is coupled is not limited to 1, and the number of antenna(s) **105** included in the electric device according to the present invention is not limited to 1.

The inductor used for the band-stop filter may be formed of, for example, a lump constant circuit, e.g., a chip circuit or the like. The capacitor circuit element may be a gap capacitor between adjacent lines or an inter-layer capacitor of a multi-layer line, as well as a chip circuit element.

(Specific examples)

In order to prove the advantageous effects of the present invention, an electromagnetic filter based on the structure shown in FIG. **9** was produced in Specific Example 1, and an electromagnetic filter based on the structure shown in FIG. **3** was produced in Specific Example 2. As targets of comparison with these examples and as typical conventional examples, electromagnetic filters were produced in Specific Comparative Examples 1 and 2. The electromagnetic filters produced in the specific examples and the specific comparative examples are the same except for main structural parameters. In the following description, the XYZ coordinate system shown in FIG. **1** and the like will be referred to.

The structure of the receiving antenna **105** to be accommodated in the shield conductor **101** is as follows.

As an antenna substrate, a liquid crystal polymer substrate (thickness: 100 $\mu$m) is used. A conductive part of the antenna is formed on a rectangular area having a size of 25 cm $\times$ 18 cm of the antenna substrate, and has a structure in which a spiral inductor formed of a copper line and a capacitor element are connected in series. The copper line has a width of 500 $\mu$m and a thickness of 35 $\mu$m, and the number of turns of the antenna is 2. The resonant frequency is set to 13.56 MHz.

The shield opening **102** was formed in a plane at Y = 0, and the antenna **105** was located on a plane at Y = 5 mm. The size of the plane of the shield opening was: **Xsc** = 40 cm; and **Zsc** = 30 cm. A position at X=Z=0 was defined as the center of gravity of the plane of the shield opening, and was matched to the center of gravity of the antenna **105.** As a transmitting antenna to be located outside the shield conductor, an antenna resonating at 13.56 MHz was formed on a liquid crystal polymer substrate also having a thickness of 100 $\mu$m. The center of gravity of the transmitting antenna was matched to the center of gravity of the plane of the shield opening. As the transmitting antenna, a copper spiral inductor having a width of 400 $\mu$m, a thickness of 35 $\mu$m, and a number of turns of 6 was formed to occupy an area of 10 cm x 10 cm. The distance between the transmitting antenna and the receiving antenna along the Y axis was 2 cm, and thus a good transmission efficiency of 82.2% was obtained between the transmitting antenna and the receiving antenna in a free space.

In Specific Example 1, based on the structure shown in FIG. **9**, an electromagnetic filter was formed on the plane at Y = 0, in which conductive strips having a width of 1 mm were extended in the Z axis direction. Unlike in the figure, the number of the conductive strips was 7, and **Xap** = 5 cm and **Zap** = 30 cm. The band-stop filters were designed such that the resonant frequency based on expression 1 would be around 13.56 MHz. Specifically, a chip inductor of 90 nH and Q = 25 and a chip capacitor of 1500 pF were located in parallel to each other. The distance between each two band-stop filters located adjacent to each other on one conductive strip was set to 5 cm. In Specific Comparative Example 1, an electromagnetic filter having the same structure as that of Specific Example 1 except that the conductive strips had no band-stop filter was produced. As compared to the transmission efficiency between the antennas in the free space, the transmission efficiency in Specific Comparative Example 1 was deteriorated by 17.2%, whereas the transmission efficiency in Specific Example 1 was deteriorated only by 0.5%. The cutoff frequency of the divided openings **112** on the noise having a vertical polarization component was estimated as 3 GHz based on expression 2. No effect of suppressing the electromagnetic noise was obtained in a frequency band having a bandwidth of about 3 MHz in the vicinity of 13.56 MHz. However, both in Specific Example 1 and Specific Comparative Example 1, by introducing the divided openings **112**, an effect of suppressing noise having a vertical polarization by 25 dB or greater was obtained at both of the frequencies of 3 MHz and 30 MHz. It should be noted that the cutoff frequency at which the effect of suppressing the electromagnetic noise having a horizontal polarization started to be obtained was 500 MHz.

Next, in Specific Example 2, an electromagnetic filter based on the structure shown in FIG. **3** was produced, in which conductive strips having a width of 1 mm were extended in the X axis direction in addition to the structure of Specific Example 1. Unlike in the figure, the number of the conductive strips along the Z axis direction was 5, and **Xap** = 5 cm and **Zap** = 5 cm. The distance between each two band-stop filters located adjacent to each other on one conductive strip was set to 5 cm.

In Specific Comparative Example 2, an electromagnetic filter having the same structure as that of Specific Example 2 except that the conductive strips had no band-stop filter was produced. As compared to the transmission efficiency between the antennas in the free space, the transmission efficiency in Specific Comparative Example 2 was deteriorated by 36.1%, whereas the transmission efficiency in Specific Example 2 was deteriorated only by 0.6%. The cutoff frequency of the divided openings **112** derived from **Xap** = **Zap** = 5 cm was 3 GHz both on the electromagnetic noise having a vertical polarization component and the electromagnetic noise having a horizontal polarization component. Both in Specific Example 2 and Specific Comparative Example 2, by introducing the divided openings **112**, an effect of suppressing noise by 25 dB or greater was obtained on both of the noise having a vertical polarization and the noise having a horizontal polarization at both of the frequencies of 3 MHz and 30 MHz.

## INDUSTRIAL APPLICABILITY

An electromagnetic filter according to the present invention does not deteriorate the electric power transmission efficiency even when a wireless electric power transmission device is mounted inside an electronic device, and also is capable of suppressing a leak of electromagnetic noise. Therefore, the electromagnetic filter according to the present invention is useful when being applied to mobile AV devices because such an electromagnetic filter allows the mobile AV devices to be charged and supplied with electric power in a simple manner. The present invention is also applicable to uses such as electric power supply to electric automobiles, electric motorbikes and electric bicycles; electric power supply to illumination devices; current collection from solar cells and fuel cells; electric power supply to electronic devices; and the like.

## REFERENCE SIGNS LIST

| | |
|---|---|
| 101 | Conductive shield configuration, shield conductor |
| 102 | Shield opening |
| 103 | Electromagnetic filter |
| 105 | Antenna |
| 106 | Dielectric support |
| 107, 107a, b | Via conductor |
| 109 | Dielectric substrate |
| 110 | Ground conductor |
| 110a, b, c, d | Side along the inner perimeter of the ground conductor |
| 111, 111a | through 111d, 21, 21a through 21f Conductive strip |
| 112 | Divided opening |
| 113, 113a, 113b, 113c | Band-stop filter |
| 115 | Area on the conductive strip 111d |
| 116a, 116b | Route on the conductive strip 111a |
| 203 | Inductor |
| 205 | Capacitor |

**Claims**

1. An electromagnetic filter locatable between a transmitting antenna and a receiving antenna for wireless transmission of radio frequency electric power, the electromagnetic filter comprising:

    a conductor (101) having a first opening (102);
    at least one conductive strip (111), the two ends of each conductive strip are electrically connected to said conductor (101) having the first opening so as to divide the first opening (102) into a plurality of second openings (112); and
    **characterized by**
    a plurality band-stop filters (113) provided on said at least one conductive strip (111) for preventing an electric current from flowing in said at least one conductive strip (111) at a frequency of the radio frequency electric power.

2. The electromagnetic filter of claim 1, wherein:

    the conductive strip (111) provided with the plurality of band-stop filters (113) includes a plurality of conductive parts located on one straight line; and
    two conductive parts, among the plurality of conductive parts, which are adjacent to each other on the one straight line are coupled to each other by one of the plurality of band-stop filters (113).

3. The electromagnetic filter of claim 1 or 2, wherein the plurality of band-stop filters (113) are each an LC resonance circuit.

4. The electromagnetic filter of any one of claims 1 through 3, further comprising a dielectric substrate for supporting the conductor (101) and the conductive strip (111).

5. The electromagnetic filter of any one of claims 1 through 3, comprising a printed circuit, board including at least one conductive layer,
   wherein the conductive strip (111) and the plurality of band-stop filters (113) are formed of the conductive layer.

6. The electromagnetic filter of any one of claims 1 through 5, wherein the frequency of the radio frequency electric power is in the range of 10 kHz to 10 GHz.

7. The electromagnetic filter of any one of claims 1 through 6, wherein the plurality of second openings (112) have at least one second opening having a perimeter length which is shorter than a wavelength of an electromagnetic wave defined by the frequency of the radio frequency electric power.

8. The electromagnetic filter of any one of claims 1 through 7, wherein, where a wavelength of an electromagnetic wave defined by the frequency of the radio frequency electric power is $\lambda$, the plurality of band-stop filters (113) are arranged on the conductive strip (111) at an interval which is different from (N/2) x $\lambda$.

9. The electromagnetic filter of any one of claims 1 through 8, wherein the at least one conductive strip (111) includes:

    a first conductive strip extending in a first direction included in a plane parallel to the first opening (102); and
    a second conductive strip extending in a second direction included in the plane and crossing the first direction.

10. The electromagnetic filter of claim 9, wherein at least a part of the first conductive strip and at least a part of the second conductive strip are connected to each other.

11. The electromagnetic filter of any one of claims 1 through 10, comprising a terminal for electrically connecting the conductor (101) to a shield conductor of an electronic device to which the electromagnetic filter is attachable.

12. An electronic device, comprising:

    an antenna for wireless transmission of radio frequency electric power; and
    the electromagnetic filter according to any one of claims 1 through 11.

13. The electronic device of claim 12, wherein the conductor (101) is eledrically connected to a shield conductor enclosing the antenna.

14. The electronic device of claim 12 or 13, wherein the conductor (101) is a shield conductor enclosing the antenna.

**Patentansprüche**

1. Elektromagnetisches Filter, das zwischen einer Sendeantenne und einer Empfangsantenne für die drahtlose Übertragung von hochfrequenter elektrischer Leistung angeordnet werden kann, wobei das elektromagnetische Filter umfasst:

   einen Leiter (101) mit einer ersten Öffnung (102),
   wenigstens einen leitenden Streifen (111), wobei die zwei Enden jedes leitenden Streifens elektrisch mit dem Leiter (101) mit der ersten Öffnung verbunden sind, um die erste Öffnung (102) in eine Vielzahl von zweiten Öffnungen (112) zu teilen, und
   **gekennzeichnet durch**
   eine Vielzahl von Bandsperrfiltern (113), die an dem wenigstens einen leitenden Streifen (111) vorgesehen sind, um zu verhindern, dass ein elektrischer Strom in dem wenigstens einen leitenden Streifen (111) mit der Frequenz der hochfrequenten elektrischen Leistung fließt.

2. Elektromagnetisches Filter nach Anspruch 1, wobei:

   der leitende Streifen (111), der mit der Vielzahl von Bandsperrfiltern (113) vorgesehen ist, eine Vielzahl von leitenden Teilen umfasst, die auf einer geraden Linie angeordnet sind, und
   zwei leitende Teile aus der Vielzahl von leitenden Teilen, die einander auf der einen geraden Linie benachbart sind, durch eines aus der Vielzahl von Bandsperrfiltern (113) miteinander gekoppelt sind.

3. Elektromagnetisches Filter nach Anspruch 1 oder 2, wobei die Vielzahl von Bandsperrfiltern (113) jeweils eine LC-Resonanzschaltung sind.

4. Elektromagnetisches Filter nach einem der Ansprüche 1 bis 3, das weiterhin ein dielektrisches Substrat zum Halten des Leiters (101) und des leitenden Streifens (111) umfasst.

5. Elektromagnetisches Filter nach einem der Ansprüche 1 bis 3, das eine Leiterplatte mit wenigstens einer leitenden Schicht umfasst,
   wobei der leitende Streifen (111) und die Vielzahl von Bandsperrfiltern (113) aus der leitenden Schicht ausgebildet sind.

6. Elektromagnetisches Filter nach einem der Ansprüche 1 bis 5, wobei die Frequenz der hochfrequenten elektrischen Leistung im Bereich von 10 kHz bis 10 GHz liegt.

7. Elektromagnetisches Filter nach einem der Ansprüche 1 bis 6, wobei die Vielzahl von zweiten Öffnungen (112) wenigstens eine zweite Öffnung umfassen, deren Umfangslänge kürzer als die Wellenlänge einer elektromagnetischen Welle ist, die durch die Frequenz der hochfrequenten elektrischen Leistung definiert wird.

8. Elektromagnetisches Filter nach einem der Ansprüche 1 bis 7, wobei, wenn die Wellenlänge einer elektromagnetischen Welle, die durch die Frequenz der hochfrequenten elektrischen Leistung definiert wird, durch $\lambda$ angegeben wird, die Vielzahl von Bandsperrfiltern (113) auf dem leitenden Streifen (111) mit einem anderen Intervall als $(N/2)$ x $\lambda$ angeordnet sind.

9. Elektromagnetisches Filter nach einem der Ansprüche 1 bis 8, wobei der wenigstens eine leitende Streifen (111) umfasst:

   einen ersten leitenden Streifen, der sich in einer ersten Richtung erstreckt, die in einer Ebene parallel zu der ersten Öffnung (102) enthalten ist, und
   einen zweiten leitenden Streifen, der sich in einer zweiten Richtung erstreckt, die in der Ebene enthalten ist und die erste Richtung kreuzt.

**10.** Elektromagnetisches Filter nach Anspruch 9, wobei wenigstens ein Teil des ersten leitenden Streifens und wenigstens ein Teil des zweiten leitenden Streifens miteinander verbunden sind.

**11.** Elektromagnetisches Filter nach einem der Ansprüche 1 bis 10, das einen Anschluss zum elektrischen Verbinden des Leiters (101) mit einem abgeschirmten Leiter einer elektronischen Vorrichtung, an der das elektromagnetische Filter angebracht werden kann, umfasst.

**12.** Elektronische Vorrichtung, die umfasst:

eine Antenne für die drahtlose Übertragung von hochfrequenter elektrischer Leistung, und
das elektromagnetische Filter nach einem der Ansprüche 1 bis 11.

**13.** Elektronische Vorrichtung nach Anspruch 12, wobei der Leiter (101) elektrisch mit einem abgeschirmten Leiter verbunden ist, der die Antenne umschließt,.

**14.** Elektronische Vorrichtung nach Anspruch 12 oder 13, wobei der Leiter (101) ein abgeschirmter Leiter ist, der die Antenne umschließt.

## Revendications

**1.** Filtre électromagnétique pouvant être logé entre une antenne d'émission et une antenne de réception en vue de la transmission sans fil d'une puissance électrique en radiofréquence, le filtre électromagnétique comprenant :

un conducteur (101) comportant une première ouverture (102),
au moins une bande conductrice (111), les deux extrémités de chaque bande conductrice étant reliées électriquement au dit conducteur (101) comportant la première ouverture de façon à diviser la première ouverture (102) en une pluralité de secondes ouvertures (112), et
**caractérisé par**
une pluralité de filtres stoppe bande (113) prévus sur ladite ou lesdites bandes conductrices (111) à une fréquence de la puissance électrique en radiofréquence.

**2.** Filtre électromagnétique selon la revendication 1, dans lequel :

la bande conductrice (111) fournie avec la pluralité de filtres stoppe bande (113) inclut une pluralité de parties conductrices situées sur une ligne droite, et
deux parties conductrices, parmi la pluralité de parties conductrices, qui sont contiguës l'une à l'autre sur une ligne droite, sont couplées l'une à l'autre par l'un de la pluralité de filtres stoppe bande (113).

**3.** Filtre électromagnétique selon la revendication 1 ou 2, dans lequel les plusieurs filtres stoppe bande (113) sont chacun un circuit LC résonnant.

**4.** Filtre électromagnétique selon l'une quelconque des revendications 1 à 3, comprenant en outre un substrat diélectrique destiné à supporter le conducteur (101) et la bande conductrice (111).

**5.** Filtre électromagnétique selon l'une quelconque des revendications 1 à 3, comprenant une carte à circuit imprimé incluant au moins une couche conductrice,
dans lequel la bande conductrice (111) et la pluralité de filtres stoppe bande (113) sont formés à partir de la couche conductrice.

**6.** Filtre électromagnétique selon l'une quelconque des revendications 1 à 5, dans lequel la fréquence de la puissance électrique en radiofréquence se trouve dans la plage allant de 10 kHz à 10 GHz.

**7.** Filtre électromagnétique selon l'une quelconque des revendications 1 à 6, dans lequel la pluralité de secondes ouvertures (112) présente au moins une seconde ouverture ayant un périmètre de longueur inférieure à la longueur d'onde d'un signal électromagnétique défini par la fréquence de la puissance électrique en radiofréquence.

**8.** Filtre électromagnétique selon l'une quelconque des revendications 1 à 7, dans lequel, si la longueur d'onde du signal électromagnétique défini par la fréquence de la puissance électrique en radiofréquence est λ, la pluralité de filtres stoppe bande (113) est agencée sur la bande conductrice (111) à un intervalle qui est différent de (N / 2) x λ.

9. Filtre électromagnétique selon l'une quelconque des revendications 1 à 8, dans lequel la ou les bandes conductrices (111) incluent :

une première bande conductrice s'étendant dans une première direction incluse dans un plan parallèle à la première ouverture (102), et
une seconde bande conductrice s'étendant dans une seconde direction incluse dans le plan et croisant la première direction.

10. Filtre électromagnétique selon la revendication 9, dans lequel au moins une partie de la première bande conductrice et au moins une partie de la seconde bande conductrice sont reliées l'une à l'autre.

11. Filtre électromagnétique selon l'une quelconque des revendications 1 à 10, comprenant une borne destinée à relier électriquement le conducteur (101) à un conducteur de blindage appartenant à un dispositif électronique auquel peut être fixé le filtre électromagnétique.

12. Dispositif électronique, comprenant :

une antenne en vue de la transmission sans fil d'une puissance électrique en radiofréquence, et
le filtre électromagnétique conforme à l'une quelconque des revendications 1 à 11.

13. Dispositif électronique selon la revendication 12, dans lequel le conducteur (101) est relié électriquement à un conducteur de blindage, lui-même autour de l'antenne.

14. Dispositif électronique selon la revendication 12 ou 13, dans lequel le conducteur (101) est un conducteur de blindage autour de l'antenne.

# FIG.1A

## FIG.1B

## FIG.1C

*FIG.2*

*FIG.3*

FIG.4

## FIG.5

## FIG.6

*FIG.7*

*FIG.8*

## FIG.9

## FIG.10A

*FIG.10B*

**EP 2 486 625 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11248835 A
- JP 2004297763 A
- JP 9135197 A
- US 20080278269 A1